# EUROPEAN PATENT APPLICATION

(11) **EP 2 620 687 A1**
(43) Date of publication of application: **31.07.2013**
(21) Application number: 13152255.9
(22) Date of filing: 22.01.2013
(51) Int. Cl.: F16L 37/098, F16L 41/03

(54) **Fluid distribution manifold**

(30) Priority: 26.01.2012 US 201261591106 P; 15.01.2013 US 201313741875
(71) Applicant: TI Group Automotive Systems, L.L.C., Auburn Hills, MI 48326 (US)
(72) Inventor: Kerin, Jim, Gross Pointe Woods, Michigan, MI Michigan 48236 (US); Gunderson, Stephen H., Marine City, Michigan, MI Michigan 48039 (US)
(74) Representative: Rohmann, Michael

(57) **Abstract**

A fluid distribution manifold for a fluid flow system comprising a manifold body having a central bore and a transverse end wall surface defining a tube reception opening, and a securement ridge at said tube reception opening, a seal retainer releasably secured to the securement ridge of the manifold body, at the tube reception opening in which the body defines at least one radial abutment surface axially inward of said tube reception opening and the seal retainer includes at least one radial abutment surface in radial abutting relation with said radial abutment surface of the manifold body. The manifold body includes a plurality of notches defining the abutment surfaces and seal retainer includes a plurality of radial tabs with abutment surfaces in radial abutting relation to the manifold body within the notches. In one form, the seal retainer includes a forward converging chamfer that converges to a diameter smaller than the diameter of the tube reception opening.

## Description

### Cross-Reference to Related Patent Applications

This application claims priority pursuant to Title 35 USC § 119(e) to U.S. Provisional Application No. 61/591,106, filed January 26, 2012, entitled "Fluid Distribution Manifold", the entire specification and drawings of which are hereby incorporated by reference herein as if fully set forth.

### Background

This invention relates to a fluid distribution manifold. More particularly, it relates to a fluid distribution manifold having a seal retention element with enhanced reliability properties for the junction between the manifold and the fluid flow system.

With the advent of battery power for vehicles, complex battery pack configurations have developed. In most arrangements, maintaining the battery temperature at efficient operating range at all climatic conditions is a requisite. The result is a battery pack cluster with an intricate heat exchange fluid system. Conditioned fluid is circulated through the system to ensure efficient operation.

Often the fluid flow system includes one or more distribution manifolds that receive a flowing fluid for distribution (or collection) to (or from) multiple fluid paths. An example of such a manifold is illustrated in U.S. Patent 7,846,573.

Typically, a manifold for a battery cooling system, comprises an elongated hollow tubular manifold body having an enlarged annular ring at one end defining annular end surface. A plurality of distribution ports or apertures extend along the length of the manifold for distributive flow to multiple branches. The typical manifold includes an internal bore in communication with the ports which defines an entry port to receive a tubular element of the fluid system. A seal member in the form of an O-ring seal is supported in the bore at the tube reception opening by an annular seal retainer or "outer spacer" which snaps into the internal bore of the manifold at the tube reception opening. The O-ring seal provides a fluid tight joint between the internal bore of the manifold and the inserted tubular member.

The fluid distribution manifolds are pre-assembled by the manufacturer and delivered to the manufacturing entity that forms the completed fluid system. The pre-assembled components include the manifold, an O-ring seal within the bore and a seal retainer frictionally secured to the manifold at the tube reception opening to retain the seal member in place.

It has been found that several factors involved in the assembly of the fluid distribution manifold introduce possible leakage risk. For one, unless the seal retainer is centered relative to the internal bore, on insertion, it may create debris that compromises the function of the O-ring seal. Moreover, since the axial length of the seal retainer relative to its diameter, "L/d ratio", is very short, uniformity of axial positioning during the insertion process is problematic. The fluid distribution manifold of the present disclosure avoids these possible problems.

### Summary of the Disclosure

### The manifold of the present disclosure includes an insertable seal retainer that provides coaxial alignment of the retainer relative to the tube reception opening to the bore to ensure aligned insertions. Moreover, the seal retainer and manifold are configured to limit maximum axial insertion of the retainer into the central bore to ensure reliable and consistent positioning of the seal retainer relative to the manifold body.

### Description of the Drawings

Fig. 1 is a partial perspective view of the fluid distribution manifold of the present disclosure.
Fig. 2 is a partial perspective view of the manifold body component of the fluid manifold.
Fig. 3 is a sectional view of the manifold body component at the tube reception opening.
Fig. 4 is a planar view of the seal retainer of the fluid distribution manifold of Fig. 1.
Fig. 5 is a revolved sectional end view of the seal retainer of Fig. 3 taken along the line 5-5 of Fig. 4.
Fig. 6 is a side view of the seal retainer of the Fig. 4.
Fig. 7 is a sectional view of the assembled fluid distribution manifold of Fig. 1.
Fig. 8 is a perspective view of the connector of the fluid system.

In accordance with the present disclosure, a fluid distribution manifold is provided which includes an improved seal retainer or outer spacer to retain a seal element at a tube reception opening. The illustrated manifold 100 includes manifold body 101, seal member 210, and seal retainer 300.

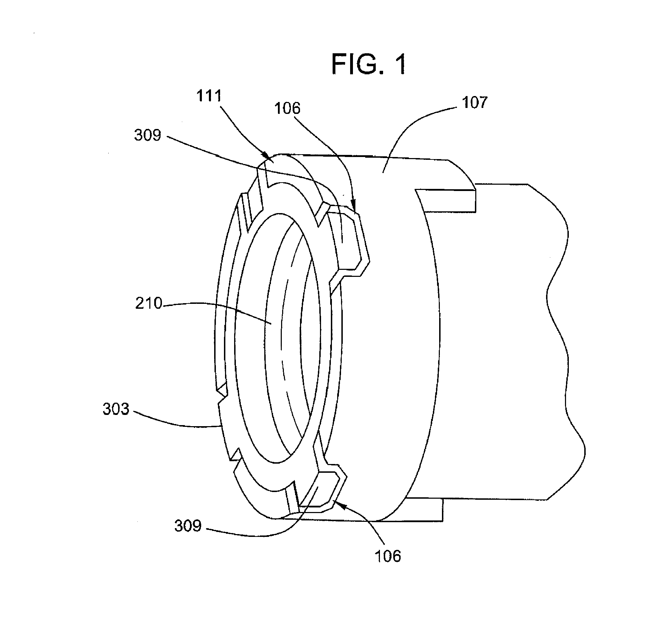

The configuration of manifold 100 for a battery cooling system is shown in Figs. 1 to 3 and 7. It comprises an elongated hollow tubular manifold body 101 having an enlarged annular ring 107 at one end. A central bore 110, having longitudinal axis, CL, extends from transverse end wall surface 109 and forms a tube reception opening 111. A plurality of ports or apertures 102 in communication with central bore 110 extend along its length for distributive flow to multiple branches.

The illustrated manifold 100 is an inlet manifold. That is, fluid is delivered to the manifold for distribution to the battery temperature control system. The principles of the present disclosure are equally applicable to a discharge or collection manifold that receives fluid from plural paths through the battery supporting structure for collection and delivery back to the flow path of the temperature control system. This improved configuration is applicable to manifold applications, regardless of whether fluid is delivered from, or collected by, the manifold within a fluid flow system.

In this disclosure, the term inward or forward means in the direction of insertion of the tubular member of the fluid flow system into the tube reception opening of the fluid distribution manifold. Outward or rearward means in the opposite direction. Radial inward means toward the central axis of the bore of the manifold and radial outward means in the opposite direction.

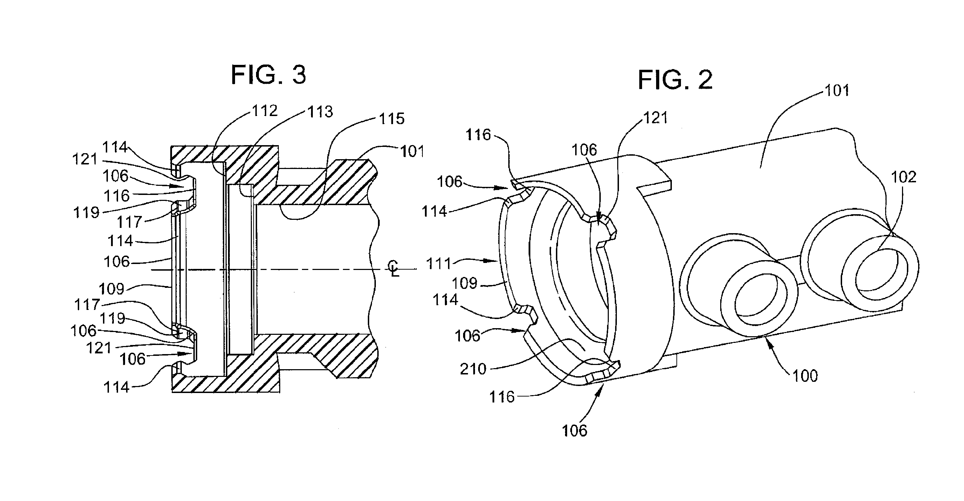

Best seen in Fig. 3, the internal bore 110 defines a cylindrical sealing surface 108 to receive a seal member, illustrated as an O-ring seal 210 in fluid tight relation. Surface 108 terminates at a radial annular abutment surface 112 spaced from tube reception opening 111 which limits axial inward translation of the O-ring seal 210. An annular stop surface 113 defines a reduced diameter step in bore 110. Bore 110 includes a cylindrical surface 115 that extends forward from radial annular abutment surface 112 to annular stop surface 113.

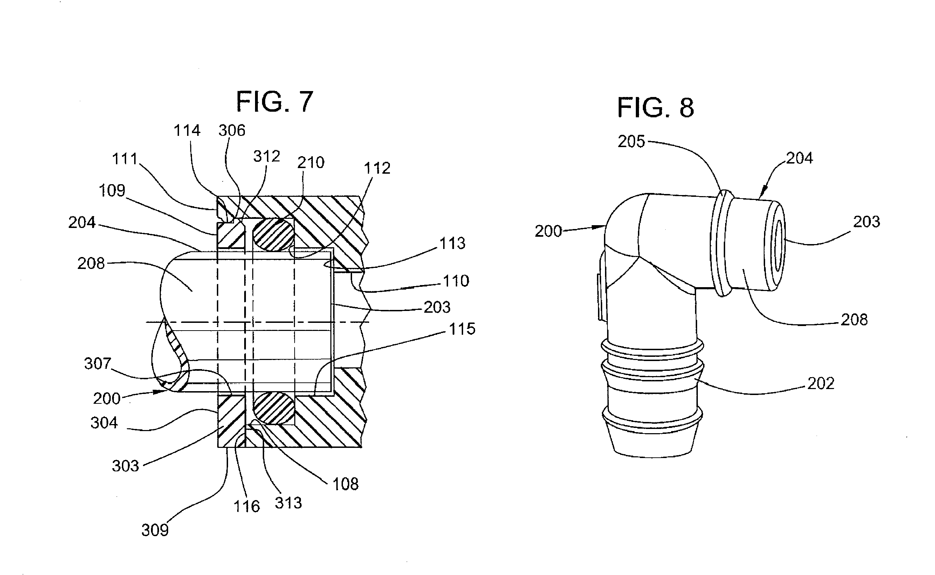

Axially forward of transverse end wall surface 109 at the tube reception opening 111, and rearward of radial annular abutment surface 112, cylindrical sealing surface 108, the bore 110 includes a radially inward securement ridge 114 best seen in Figs. 3 and 7. Securement ridge 114 defines the inner diameter of bore 110 at tube reception opening 111, which is somewhat smaller than the diameter of cylindrical sealing surface. It is configured to frictionally retain seal retainer 300 within bore 110 as further described below.

Enlarged annular ring 107 of manifold body 101 includes a plurality of radial notches 106 surrounding tube reception opening 111. The radial notches 106 extend axially forward from transverse end wall surface 109 at tube reception opening 111 of the manifold body 101 to abutment surfaces 116 an axial distance somewhat longer than the axial extent of inward securement ridge 114. In the illustrated configuration, four equally spaced radial notches 106 are provided. The number and spacing is not critical, though the balance of equal spacing is preferred, however.

By virtue of the presence of radial notches 106 at the tube reception opening 111, the inward securement ridge 114 is intermittent. That is, it is not completely circular, but is interrupted by the notches 106. As best seen in Figs. 1 to 3, the notches 106 include entrance chamfers 117 that converge toward each other from transverse end wall surface 109 terminating in radial side walls 119. Side walls 119 are joined to abutment surface 116 by bottom chamfers 121.

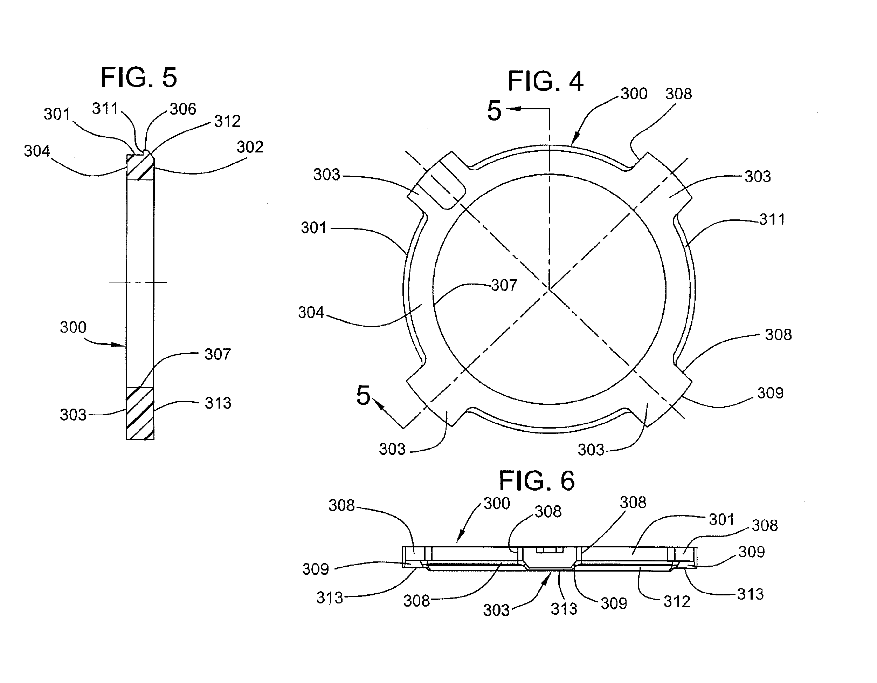

The manifold configuration of the present disclosure includes an annular seal retainer or outer spacer 300 shown in Figs. 4 to 7. It has an annular body having an outer cylindrical surface 301 extending from forward annular surface 302 toward a rearward annular surface 304. Cylindrical surface 301 is sized to fit in closely spaced overlying relation to the internal diameter of radial inward securement ridge 114 of bore 110 of manifold body 101.

A radial outward rim 306 extends about the outer cylindrical surface 301. It is joined to forward annular surface 302 by annular chamfer 312. Annular chamfer 312 converges radially inward and intersects forward annular surface 302 at a diameter smaller than the diameter of central bore 110 at radial inward securement ridge 114. The radial outward rim 306 has an outer cylindrical surface with a diameter larger than the inner diameter of the radial inward securement ridge 114. The radial outward rim is sized to fit in closely spaced concentric relation to the cylindrical sealing surface 108 of internal bore 110 of manifold body 101. Radial outward rim 306 defines a rearward facing radial abutment surface 311 at cylindrical surface 301 that engages with securement ridge 114 to resist axial outward movement, or withdrawal, of seal retainer 300 to maintain the retainer 300 in tube reception opening 111.

It should be pointed out that though certain surfaces of the seal retainer 300 are described as cylindrical, or annular, these surfaces are discontinuous, arcuate segments that extend between the equally spaced tabs 303.

The internal diameter 307 of seal retainer 300 is about the same diameter as the diameter of cylindrical surface 115 of bore 110 of manifold body 101. It is sized to freely receive connection to the fluid system fitting or connector.

In the illustrated arrangement, the system fluid is delivered to the manifold 100 by a fitting or connector 200 illustrated in Fig. 7. It is a tubular member having a hose connection 202 at one end and a tubular sleeve portion 204 at the other. The sleeve portion 204 defines an annular forward end 203. Sleeve portion 204 includes an outer cylindrical sealing surface 208 sized to fit within the internal bore 307 of seal member retainer 306 at tube reception opening 111 of manifold body 101. It is disposed in a fluid tight relationship with the O-ring seal 210 interposed between the cylindrical sealing surface 208 of sleeve portion 204 and cylindrical sealing surface 108 of the manifold bore 110. When fully inserted, annular forward end 203 of connector 200 may abut stop surface 113 within central bore 110. A retainer clip (not shown) secures the connector 200 to manifold body 101 with sleeve portion 204 within the internal bore 307 of seal retainer 306 and bore 110 of manifold body 101.

In accordance with the disclosure, seal retainer or outer spacer 300 includes equally spaced radial tabs 303 extending from outer cylindrical surface 301. Each has a circumferential extent between radial walls 308 consistent with insertion of the tabs 303 into notches 106 of manifold body 101. Each has a radial outer edge formed on a diameter about the same size as the transverse end wall surface 109 of enlarged ring 107 of manifold body 101. The axial thickness of each tab 303 is coextensive with the axial thickness of the seal retainer 300 between forward annular surface 302 to rearward annular surface 304. Notably, the axial depth of notches 106 of manifold body 101, from transverse end wall surface 109 to abutment surfaces 116 is about the same as the axial thickness of tabs 303.

Tabs 303 each include forward abutment surface 313 co-planar with forward annular surface 302. The tabs include guide tapers 309 between forward abutment surfaces 313 and side walls 308.

Referring to Figs. 1 and 7, the manifold 100 is pre-assembled to contain an O-ring seal 210 within internal bore 110 at cylindrical sealing surface 108. Seal 210 is held in position by seal retainer 300 releasably snapped into the tube reception opening 111 such that radial outward rim 306 surpasses radially inward securement ridge 114. As seen in Fig. 7, assembly, proceeds by insertion of O-ring seal 210 into internal bore 110 in fluid tight relation to cylindrical sealing surface 108. Seal retainer 300 is then positioned with internal bore 307 coaxially aligned with internal bore 110. The tabs 303 of seal retainer 300 are circumferentially aligned to reside in radial notches 106. The guide tapers 309 on tabs 303 coact with entrance chamfers 117 of notches 106 at transverse end wall surface 109 to circumferentially orient the tabs 303 relative to the notches.

The seal retainer 300 is urged axially forward until forward abutment surfaces 313 of tabs 303 abut abutment surfaces 116 in notches 106 to limit axial forward insertion of the retainer ring 300 into the tube reception opening 111. In this position, rearward radial abutment surface 311 resides forward of securement ridge 114 to releasably secure seal retainer 300 within tube reception opening 111. The O-ring seal 210 is captured between the forward annular surface 302 of seal retainer 300 and the radial annular abutment surface 112 of bore 110 of manifold body 101.

Importantly, the diameter of internal bore 307 is smaller than the diameter of securement ridge 114 of bore 110 at tube reception opening 111. Therefore, on inward axial translation of seal retainer 300 into tube reception opening 111, the chamfer 312 automatically centers the seal retainer 300 relative to bore 110. That is, the bore 110 and the internal bore 307 of seal retainer 300 are coaxially aligned permitting effective insertion. Thus, chamfer 312 accommodates coaxial alignment to eliminate any degradation of the components during axial insertion of retainer 300.

Since the axial thickness of tabs 303 is about the same as the axial depth of radial notches 106, the rearward surface 304 of retainer 300 is generally axially aligned with the wall surface 109 of enlarged annular ring 107 of manifold body 101. Thus, the pre-assembled manifold 100 is configured for receiving tubular portion 204 of connector 200 of fluid flow system.

The outer cylindrical sealing surface 208 of sleeve 204 is sized somewhat larger in diameter than the inner diameter of O-ring seal 210. Insertion of sleeve 204 through tube reception opening 111 causes the outer cylindrical sealing surface 208 to seal against the inner diameter of O-ring seal 210 and outer diameter of O-ring seal 210 to seal against cylindrical sealing surface 108. in bore 110 of manifold body 101. Annular stop surface 113 limits forward insertion of sleeve 204 into bore 110 by abutment with forward annular end 203 of sleeve portion 204. The forward end of sleeve portion 204 resides in slidable relation to internal bore 307 of retainer ring 300 and cylindrical surface 115 of bore 110. Attachment of connector 200 is completed by joinder of the connector 200 to enlarged end 107 of manifold body 101 by means (not shown).

Variations and modifications of the foregoing are within the scope of the present invention. It is understood that the invention disclosed and defined herein extends to all alternative combinations of two or more of the individual features mentioned or evident from the text and/or drawings. All of these different combinations constitute various alternative aspects of the present invention. The claims are to be construed to include alternative embodiments to the extent permitted by the prior art.

## Claims

1. A fluid distribution manifold for a fluid flow system comprising:
a manifold body having:
a central bore and a transverse end wall surface defining a tube reception opening,
a securement ridge in said central bore forward of said tube reception opening,
a seal retainer releasably secured to said securement ridge of said manifold body at said tube reception opening,
said body defining at least one abutment surface axially inward of said tube reception opening and
said seal retainer including at least one radial abutment surface in radial abutting relation with said radial abutment surface of said manifold body.

2. A fluid distribution manifold for a fluid system as claimed in claim 1, wherein said manifold body includes a plurality of notches extending axially inward from said transverse end wall surface, each defining an abutment surface and said seal retainer includes a plurality of radial tabs each defining an abutment surface in radial abutting relation to said abutment surfaces of said notches.

3. A fluid distribution manifold for a fluid system as claimed in claim 2 wherein said notches of said manifold body and said tabs of said seal retainer are equally spaced about said tube reception opening.

4. A fluid distribution manifold for a fluid system as claimed in claim 3 wherein the axial width of said tabs is about the same as the axial depth of said notches from said transverse end wall surface of said manifold body.

5. A fluid distribution manifold for a fluid system as claimed in claim 4 wherein said manifold body includes four equally spaced notches and said seal retainer includes four equally spaced tabs.

6. A fluid distribution manifold for a fluid system as claimed in claim 5 wherein said manifold includes an O-ring seal in said central bore forward of said seal retainer.

7. A fluid distribution manifold for a fluid system as claimed in claim 1 wherein said seal retainer includes a radially outer rim having an outer cylindrical surface with a diameter larger than the inner diameter of said radial inward securement ridge.

8. A fluid distribution manifold for a fluid system as claimed in claim 7 wherein said radially outer rim of said seal retainer defines a rearward facing radial abutment surface that engages with said securement ridge in said central bore.

9. A fluid distribution manifold for a fluid system as claimed in claim 8, wherein said seal retainer includes a forward annular surface and an annular chamfer converging radially inward and intersecting said forward annular surface at a diameter smaller than the diameter of said central bore at said radial inward securement ridge.

10. A fluid distribution manifold for a fluid system as claimed in claim 9, wherein said manifold body includes a plurality of notches extending axially inward from said transverse end wall surface,
and said seal retainer includes a plurality of radial tabs in radial abutting relation to said manifold body within said notches.

11. A fluid distribution manifold for a fluid system as claimed in claim 10 wherein said notches of said manifold body and said tabs of said seal retainer are equally spaced about said tube reception opening.

12. A fluid distribution manifold for a fluid system as claimed in claim 11 wherein the axial width of said tabs is about the same as the axial depth of said notches from said transverse end wall surface of said manifold body.

13. A fluid distribution manifold for a fluid system as claimed in claim 12 wherein said manifold body includes four equally spaced notches and said seal retainer includes four equally spaced tabs.

14. A fluid distribution manifold for a fluid system as claimed in claim 13 wherein said manifold includes an O-ring seal in said central bore releasably retained by said seal retainer.

15. A fluid distribution manifold for a fluid flow system comprising:
a manifold body having:
a central bore and a transverse end wall surface defining a tube reception opening,
a securement ridge in said central bore forward of said tube reception opening,
a seal retainer releasably secured to said securement ridge of said manifold body at said tube reception opening,
wherein said seal retainer includes a radially outer rim having an outer cylindrical surface with a diameter larger than the inner diameter of said radial inward securement ridge that engages with said securement ridge in said central bore, and
wherein said seal retainer includes a forward annular surface and an annular chamfer converging radially inward and intersecting said forward annular surface at a diameter smaller than the diameter of said central bore at said radial inward securement ridge.

16. A method of assembling a fluid distribution manifold as claimed in claim 2 comprising the steps of:
inserting said seal retainer into said central bore until said abutment surfaces of said tabs abut said abutment surfaces of said notches.

17. A method of assembling a fluid distribution manifold as claimed in claim 8 comprising:
urging said seal member toward said tube reception opening to cause said annular chamfer of said seal retainer into contact with said securement ridge and continuing to urge said seal member into said central bore until said abutment surfaces of said manifold and said seal retainer are in abutting relation.
